(19) Europäisches Patentamt
European Patent Office
Office européen des brevets

(11) **EP 2 672 137 A1**

(12) **EUROPÄISCHE PATENTANMELDUNG**

(43) Veröffentlichungstag:
**11.12.2013 Patentblatt 2013/50**

(51) Int Cl.:
**F16F 1/387** (2006.01)     **F16F 13/14** (2006.01)

(21) Anmeldenummer: **12004334.4**

(22) Anmeldetag: **06.06.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Firma Carl Freudenberg
69469 Weinheim (DE)**

(72) Erfinder:
• **Werner, Philipp Dr.
21339 Lüneburg (DE)**
• **Schröder, Bastian
21266 Jesteburg (DE)**

(54) **Hydrolager**

(57)     Hydrolager, umfassend einen Kern (1), ein Gehäuse (2) und zumindest einen Federkörper (3) aus einem gummielastischen Werkstoff, wobei das Gehäuse (2) den Kern (1) aussenumfangsseitig mit radialem Abstand umschließt und wobei in dem durch den Abstand gebildeten Spalt (4) der Federkörper (3) angeordnet ist, wobei der Kern (1), das Gehäuse (2) und der Federkörper (3) einen Arbeitsraum (5) und einen Ausgleichsraum (6) begrenzen, die mit Dämpfungsflüssigkeit (7) gefüllt und durch zumindest einen Dämpfungskanal (8) flüssigkeitsleitend miteinander verbunden sind, wobei der Arbeitsraum (5) und der Ausgleichsraum (6) einander in radialer hydraulischer Arbeitsrichtung (9) gegenüberliegend angeordnet sind und jeweils in axialer Richtung (10) beiderseits durch erste (11, 12) und zweite Membranen (13, 14) des Federkörpers (3) begrenzt sind. Die ersten Membranen (11, 12) zusammen mit Elastomerwänden (38, 39), die den Arbeitsraum (5) begrenzen, weisen eine erste Blähsteifigkeit auf, die zumindest 1,5-fach größer ist, als die zweite Blähsteifigkeit der zweiten Membranen (13, 14) zusammen mit den Elastomerwänden (38,39), die den Ausgleichsraum (6) begrenzen.

Fig. 1

EP 2 672 137 A1

**Beschreibung**

Technisches Gebiet

Die Erfindung betrifft ein Hydrolager, umfassend einen Kern, ein Gehäuse und zumindest einen Federkörper aus einem gummielastischen Werkstoff, wobei das Gehäuse den Kern außenumfangsseitig mit radialem Abstand umschließt und wobei in dem durch den Abstand gebildeten Spalt der Federkörper angeordnet ist, wobei der Kern, das Gehäuse und der Federkörper einen Arbeitsraum und einen Ausgleichsraum begrenzen, die mit Dämpfungsflüssigkeit gefüllt und durch zumindest einen Dämpfungskanal flüssigkeitsleitend miteinander verbunden sind, wobei der Arbeitsraum und der Ausgleichsraum einander in radialer hydraulischer Arbeitsrichtung gegenüberliegend angeordnet sind und jeweils in axialer Richtung beiderseits durch erste und zweite Membranen des Federkörpers begrenzt sind.

Stand der Technik

Solche Hydrolager sind allgemein bekannt und gelangen z. B. in Kraftfahrzeugen zur Anwendung.
Bei den vorbekannten Hydrolagern sind alle den Kern in Umfangsrichtung umschließenden Membranen in der Form ähnlich ausgebildet, so dass ihre Blähsteifigkeiten sich wenig voneinander unterscheiden.
Durch die ähnlich ausgebildeten Membranen kann, abhängig von den jeweiligen Gegebenheiten des Anwendungsfalls und der daraus resultierenden Konstruktion, lediglich ausgewählt werden, ob alle ähnlich ausgebildeten Membranen relativ dünn oder relativ dick ausgebildet sind. Das Hydrolager kann eine hohe radiale Steifigkeit aufweisen, z. B. dadurch, dass die zur Anwendung gelangenden Membranen vergleichsweise dick ausgebildet sind, wobei diese dicken Membranen und die hohe radiale Steifigkeit zwar zu keinen unerwünschten Klopfgeräuschen führen, jedoch zu vergleichsweise schlechten akustischen und dynamischen Eigenschaften des Hydrolagers bei hohen Frequenzen durch eine hohe dynamische Steifigkeit.
Werden die Membranen demgegenüber dünner ausgeführt, führt dies zwar einerseits zu guten dynamischen Eigenschaften, wie zu geringen dynamischen Steifigkeiten bei hohen Frequenzen und dadurch zu vergleichsweise guten akustischen Eigenschaften und einem vergleichsweise guten Komfort. Andererseits neigen diese Hydrolager während ihrer bestimmungsgemäßen Verwendung dazu, bei impulsartigen radialen Auslenkbewegungen des Kerns relativ zum Gehäuse anzuschlagen, wodurch unerwünschte Klopfgeräusche entstehen können.

Darstellung der Erfindung

Der Erfindung liegt die Aufgabe zugrunde, ein Hydrolager derart weiterzuentwickeln, dass dieses während der bestimmungsgemäßen Verwendung sowohl klopfunempfindlich als auch komfortabel ist. Das Hydrolager soll ein möglichst geräuscharmes, robustes Anschlagsystem und gute dynamische Eigenschaften, wie eine geringe dynamische Steifigkeit bei hohen Frequenzen, aufweisen.
Diese Aufgabe wird erfindungsgemäß durch ein Hydrolager gemäß Anspruch 1 gelöst. Auf vorteilhafte Ausgestaltungen nehmen die auf Anspruch 1 rückbezogenen Unteransprüche Bezug.
Zur Lösung der Aufgabe ist ein Hydrolager vorgesehen, bei dem die ersten, radial um den Kern verlaufenden Membranen, die den ersten Arbeitsraum begrenzen, in der Art ausgeführt werden, dass die Gesamtblähsteifigkeit der ersten Fluidkammer zumindest 1,5-fach größer ist, als die Gesamtblähsteifigkeit des zweiten Ausgleichsraumes.
Durch die unterschiedlichen Blähsteifigkeiten können unterschiedliche Gebrauchseigenschaften des Hydrolagers in der radialen hydraulischen Arbeitsrichtung erreicht werden. Die radiale hydraulische Arbeitsrichtung verläuft einerseits bremsseitig und andererseits beschleunigungsseitig. Bei bremsseitiger Belastung des Hydrolagers verkleinert sich das Volumen des Arbeitsraums und die Dämpfungsflüssigkeit wird durch den Dämpfungskanal in den sich vergrößernden Ausgleichsraum bewegt. Bei beschleunigungsseitiger Belastung des Hydrolagers verkleinert sich demgegenüber das Volumen des Ausgleichsraums und die Dämpfungsflüssigkeit wird durch den Dämpfungskanal in den sich vergrößernden Arbeitsraum bewegt. Die bremsseitigen Belastungen sind dabei größer, als die beschleunigungsseitigen, so dass erfindungsgemäß die ersten und zweiten Membranen an diese unterschiedlichen Belastungen angepasst und speziell dafür passend ausgelegt sind.
Die ersten Membranen sind bremsseitig im Hydrolager angeordnet, wobei diese Membranen durch Bremsvorgänge eines Kraftfahrzeugs, in dem das Hydrolager zur Anwendung gelangt, auf Druck belastet werden. Die Blähsteifigkeit dieser ersten Membranen ist vergleichsweise größer, um in der statischen Kennlinie eine Progression zu erzeugen. Beim Bremsen verkleinert sich, wie zuvor ausgeführt, der Arbeitsraum und es entsteht ein hoher Innendruck, der zusammen mit der hohen Blähsteifigkeit der ersten Membranen und damit der hohen Gesamtblähsteifigkeit der ersten Fluidkammer zu einer allmählichen und klopffreien Bewegung des Kerns in radialer hydraulischer Arbeitsrichtung auf das Gehäuse zu führt.
Der Vollständigkeit halber wird in diesem Zusammenhang darauf hingewiesen, dass es eine weitere, die Blähsteifigkeit beider Kammern beeinflussende Blähwand geben kann: der Arbeitsraum und der Ausgleichsraum können voneinander durch Elastomerwände in axialer Richtung getrennt sein. Alle eine Fluidkammer begrenzenden Blähwände gehen als Reihenschaltung in die Gesamtblähsteifigkeit des jeweiligen Raums ein. Diese trennenden, axial verlaufenden Elastomerwände werden erfindungsgemäß nur insofern betrachtet, als sie bei der Berechnung der Blähsteifigkeiten der Räume berücksichtigt werden müssen.

Der Ausgleichsraum wird durch die beschleunigungsseitigen, in Umfangsrichtung um den Kern verlaufenden zweiten Membranen und die trennende Elastomerwand begrenzt. Die beim Beschleunigen eines Kraftfahrzeugs auftretenden Kräfte sind kleiner als die Kräfte, die beim Bremsen auf das Hydrolager wirken. Beim Beschleunigen sind die Impulslasten deutlich kleiner als beim Bremsen, die Klopfneigung des Hydrolagers beim Beschleunigen ist folglich geringer als beim Bremsen, so dass die zweiten Membranen eine geringere Blähsteifigkeit aufweisen können.

Die dynamische Steifigkeit bei hohen Frequenzen bildet sich aus der Summe der statischen Steifigkeit unter Berücksichtung der dynamischen Verhärtung bei kleinen Anregungsamplituden und den beiden Gesamtblähsteifigkeiten von Arbeits- und Ausgleichsraum, maßgeblich beeinflusst durch die Membranen auf der Brems- und Beschleunigungsseite von Arbeitsraum und Ausgleichsraum des Hydrolagers.

Erfindungsgemäß ist es vorgesehen, dass die Gesamtblähsteifigkeiten auf der Brems- und Beschleunigungsseite bewusst unterschiedlich ausgelegt werden. Dieses wird dadurch erreicht, dass die Blähsteifigkeiten der ersten Membranen und die Blähsteifigkeiten der zweiten Membranen sehr unterschiedlich eingestellt werden. Der Unterschied der Gesamtblähsteifigkeit beider Kammern unterscheidet sich erfindungsgemäß zumindest um Faktor 1,5, um einerseits beim Bremsen eines Kraftfahrzeugs Klopfgeräusche des Hydrolagers durch ausreichende Steifigkeit der ersten Membranen zu vermeiden und andererseits eine Absenkung der dynamischen Steifigkeit bei hohen Frequenzen durch eine ausreichende Nachgiebigkeit der zweiten Membranen zu erhalten, um einen ausreichend guten Komfort des Kraftfahrzeugs während der bestimmungsgemäßen Verwendung des Hydrolagers zu erzielen.

Es kann z. B. vorgesehen sein, dass die Blähsteifigkeit der ersten Membranen, die den Arbeitsraum begrenzen, etwa 600 N/mm ist, während die Blähsteifigkeit der zweiten Membranen, die den Ausgleichsraum begrenzen, etwa 300 N/mm beträgt.

Erfindungsgemäß sind dabei folgenden Steifigkeitsabstufungen einzustellen:

Gesamtblähsteifigkeit der ersten Membranen sowie gegebenenfalls der ersten Elastomerwand, die den Arbeitsraum begrenzen, also bremsseitig: $BISt_{BR}$
Gesamtblähsteifigkeit der zweiten Membranen sowie gegebenenfalls der zweiten Elastomerwand, die den Ausgleichsraum begrenzen, also beschleunigungsseitig: $BISt_{BE}$
Grundsteifigkeit des Lagers, gemessen mit einer Messgeschwindigkeit von höchstens 10 mm/min im linearen Bereich des Lagers im Bereich des Arbeitspunktes, nach dreimaligem Vorwalken mit $\pm 3$ kN: G

[N/mm].

$$BISt_{BR} / BISt_{BE} \geq 1{,}5$$

$$BISt_{BE} \leq G$$

$$\text{Mit } 250 \text{ N/mm} \leq G \leq 900 \text{ N/mm}$$

Nach einer vorteilhaften Ausgestaltung kann es vorgesehen sein, dass die ersten Membranen und/oder die zweiten Membranen jeweils an einer gedachten Radialebene, axial mittig des Hydrolagers gespiegelt, ausgebildet sind. Die Blähsteifigkeiten der beiden ersten Membranen sind dadurch nahezu gleich, ebenso wie die Blähsteifigkeiten der zweiten Membranen. Dabei ist es nicht notwendiger Weise so, dass die Geometrie der jeweils ersten und/oder zweiten Membranen exakt übereinstimmen, da axial wirkende Vorlasten geometrische Korrekturen an den Membranen erforderlich machen können. Bevorzugt sind die ersten Membranen aber gleich ausgebildet, ebenso wie die zweiten Membranen gleich ausgebildet sind. Die sich in radialer Richtung erstreckenden, den Kern umfangsseitig umschließenden Membranen, die gemeinsam mit den axial angeordneten Elastomerwänden einen mit Dämpfungsflüssigkeit gefüllten Raum begrenzen, weisen dadurch eine gut übereinstimmende Blähsteifigkeit auf.

Besonders einfach können die unterschiedlichen Blähsteifigkeiten der ersten Membranen und der zweiten Membranen relativ zueinander erreicht werden, wenn die ersten Membranen eine erste Dicke aufweisen, die größer als eine zweite Dicke der zweiten Membranen ist. Auch die Steifigkeit in Arbeitsrichtung der ersten Membranen ist dadurch größer als die Steifigkeit der zweiten Membranen in Arbeitsrichtung. Die ersteren Membranen können unter Druck, das heißt bei einer Belastung durch Bremsen, zudem im Hinblick auf Ihre Steifigkeit progressiver als die zweiten Membranen wirken. Impulsartige Belastungen, wie sie beim Bremsen auftreten können, führen zudem zu hohen Innendrücken im Arbeitsraum, der von den ersten Membranen begrenzt ist. Dieser Innendruck resultiert ebenfalls in eine der impulsartigen Belastung entgegengesetzt wirkenden Kraft. Voraussetzung für die hohen Innendrücke ist ein entsprechend steif eingestelltes Überdruckventil. Die Steifigkeitsprogression der ersten Membranen, sowie ihre hohe Blähsteifigkeit bzw. die hieraus resultierende hohe Gesamtblähsteifigkeit mit den resultierenden hohen Innendrücken führen dazu, dass die impulsartigen Bremskräfte aufgenommen werden können, ohne dass es zu unerwünschten Anschlaggeräuschen kommt. Hierfür werden die zweiten, radial um den Kern verlaufenden Membranen gegenüber den ersten, radial verlaufenden Membranen deutlich dicker ausgeführt und/oder in anderen Winkeln in Bezug auf die hydraulische Arbeitsrichtung des Lagers ausgeführt.

Die relativ geringeren und nicht so stark impulsartig auftretenden Beschleunigungskräfte führen trotz blähweicherer Ausführung der zweiten Membranen zu einer wesentlich geringeren Klopfneigung.

Durch die funktionsindividuelle Anpassung der Membranen werden einerseits Klopfgeräusche beim Bremsen vermieden, und andererseits wird eine spürbare Absenkung der dynamischen Steifigkeit des Hydrolagers bei hohen Frequenzen erreicht, um gute akustische und dynamische Eigenschaften und dadurch einen insgesamt guten Komforteindruck zu erhalten.

Die in axialer Richtung einerseits und/oder die axial andererseits angeordnete erste Membran und die entsprechend angeordneten zweiten Membranen können in Umfangsrichtung einstückig ineinander übergehend ausgebildet sein. Das Hydrolager weist dadurch einen einfachen und teilearmen Aufbau auf. Außerdem ist durch eine solche Ausgestaltung die Abdichtung der mit Dämpfungsflüssigkeit gefüllten Kammern vereinfacht. Der Arbeitsraum und der Ausgleichraum sind dadurch durch eine erste Membran abgedichtet, die, in Umfangsrichtung betrachtet, in die zweite Membran übergeht; diese stirnseitig beiderseits jeweils angeordnete, ineinander übergehende, kombinierte Membran, umfassend die erste Membran für den Arbeitsraum und die zweite Membran für den Ausgleichsraum, ist folglich asymmetrisch ausgebildet. Denkbar ist es auch, dass die Membranen nicht einstückig ineinander übergehen. Eine solche Ausgestaltung kann gewählt werden, um die statischen Steifigkeitsverhältnisse des Lagers einzustellen.

Die erste Dicke und die zweite Dicke können mit einer sprunghaften Richtungsänderung ineinander übergehend ausgebildet sein.

Die vergleichsweise dickeren ersten Membranen sind weniger empfindlich gegenüber reibungsbedingtem Verschleiß, witterungsbedingtem Versagen, zum Beispiel durch Ozonrisse oder der Neigung zur Faltenbildung.

Im Längsschnitt des Hydrolagers betrachtet, können die ersten Membranen mit der Außenumfangsfläche des Kerns einen ersten Winkel begrenzen, der größer als ein zweiter Winkel ist, den die zweiten Membranen mit der Außenumfangsfläche des Kerns begrenzen. Durch die unterschiedlichen Winkel kann ebenfalls Einfluss auf die Federcharakteristik des Hydrolagers und deren Blähsteifigkeit genommen werden. Durch den sehr viel größeren Winkel der ersten Membranen können die beim Bremsen auftretenden Kräfte in radialer hydraulischer Arbeitsrichtung sehr wirkungsvoll durch die vergleichsweise dicken ersten Membranen abgestützt werden. Die Steifigkeit des Lagers in Bremsrichtung ist deshalb vergleichsweise hoch.

Die Absenkung der dynamischen Steifigkeit bei hohen Frequenzen wird dadurch begünstigt, dass die zweiten Membranen beschleunigungsseitig einen wesentlich kleineren Winkel mit der Außenumfangsfläche des Kerns einschließen, hierdurch länger ausgeführt werden können und dadurch zum Beispiel selbst bei gleicher Dicke nachgiebiger sind.

Der erste Winkel kann bevorzugt 75° bis 90°, der zweite Winkel bevorzugt 30° bis 60° betragen.

Die Membranen können außenumfangsseitig mittels eines Fensterrohrs flüssigkeitsdicht mit dem Gehäuse verbunden sein. Das Fensterrohr kann beispielsweise aus einem metallischen oder polymeren Werkstoff bestehen, wobei dessen Außenumfang vom gummielastischen Werkstoff, aus dem die jeweiligen Membranen bestehen, bevorzugt umschlossen ist. In jedem Fall ist außenumfangsseitig eine Dichtung zum Gehäuse hin vorzusehen, die jedoch auch durch Schweißen oder Kleben stoffschlüssig ausgeführt werden könnte.

Der Kern, die Membranen und das Fensterrohr können eine vormontierbare Einheit bilden. Die vormontierbare Einheit wird bevorzugt derart mit dem Gehäuse verbunden, dass die vormontierbare Einheit in einem mit Dämpfungsflüssigkeit gefüllten Bad in das Gehäuse eingeschoben wird, wobei im Anschluss daran die stirnseitigen Enden des Gehäuses umgebördelt oder rolliert und dadurch mit der vormontierbaren Einheit verbunden werden. Der Arbeitsraum und der Ausgleichsraum sind dann mit der Dämpfungsflüssigkeit gefüllt.

Eine andere bevorzugte Möglichkeit der Befüllung ist die im Anschluss an die Montage der vormontierten Einheit mit dem Gehäuse stattfindende Trockenbefüllung. Eine Möglichkeit der Trockenbefüllung besteht zum Beispiel darin, durch ein stirnseitiges Loch durch die vormontierte Einheit zunächst die Luft im Inneren zu evakuieren und im Anschluss durch das selbe Loch eine Befüllung durchzuführen. Im Anschluss folgt eine Abdichtung des Loches z.B. mit einer Kugel.

Innerhalb des Arbeitsraums und innerhalb des Ausgleichsraums kann jeweils ein Anschlagpuffer zur Begrenzung von radialen Auslenkbewegungen von Kern und Gehäuse relativ zueinander angeordnet sein. Diese Anschlagpuffer sind vorgesehen, um unerwünscht hohe Zug-/Schubspannungen in den gummielastischen Membranen und gegebenenfalls den trennenden Elastomerwänden zu vermeiden. Das erfindungsgemäße Hydrolager weist deshalb gleichbleibend gute Gebrauchseigenschaft während einer langen Gebrauchsdauer auf.

Die Anschlagpuffer können durch jeweils einen Anschlagwulst gebildet sein, der sich vom Kern radial nach außen in Richtung des Gehäuses erstreckt und durch jeweils einen gehäuseseitigen Gegenanschlag. Die Anschlagpuffer im Arbeitsraum und im Ausgleichsraum können einstückig ineinander übergehend ausgebildet sein. Dabei können Sie materialeinheitlich mit dem Kern oder als Hybridkern, das heißt einem mit Kunststoff umspritzten, metallischen Kern ausgebildet sein.

Zur Begrenzung der radialen Auslenkbewegungen können sich die Anschlagpuffer an den entsprechenden Gegenanschlag anlegen, bevor die gummielastischen Membranen unerwünscht stark gedehnt werden und dadurch Schaden nehmen können.

Jeder Gegenanschlag kann sich radial nach innen in Richtung des Kerns erstrecken und eine zum entsprechenden Anschlagwulst kongruent gestaltete Gegenanschlagfläche aufweisen. Jeder Anschlagwulst kann z. B., im Längsschnitt des Hydrolagers betrachtet, eine konvexe Wölbung aufweisen, die an eine entsprechend konkave Wölbung der Gegenanschlagfläche anlegbar ist. Bei einer Anschlagberührung des Anschlagwulsts an der entsprechenden Gegenanschlagfläche werden dadurch unerwünscht hohe spezifische Flächenpressungen vermieden, ebenso wie Verschleiß und Geräusch. Außerdem funktioniert der Anschlag auch dann gut, wenn während der Anschlagberührung die jeweiligen Achsen von Kern und Gehäuse nicht mehr ganz parallel zueinander verlaufen.

Eine weitere Reduzierung der Anschlaggeräusche kann dadurch erreicht werden, dass jeder Anschlag mittels einer Feder gegenüber dem Gehäuse abgestützt sein kann. Die Feder kann dabei durch eine Spur aus einem gummielastischen Werkstoff gebildet sein. Der Gegenanschlag ist dadurch elastisch nachgiebig mit dem Gehäuse verbunden.

Jeder Gegenanschlag kann mittels der entsprechenden Feder mit einem Einlegeteil, das den Dämpfungskanal umfassen kann, verbunden sein, wobei das Einlegeteil am Innenumfang des Gehäuses festgelegt ist und mit diesem den Dämpfungskanal begrenzen kann. Das Gehäuse kann beispielsweise durch ein hohlzylinderförmiges Blech gebildet sein. Das Einlegeteil kann dann in Umfangsrichtung umlaufende, radial nach außen offene Nuten enthalten, durch die der Dämpfungskanal gebildet ist. Während der bestimmungsgemäßen Verwendung des Hydrolagers ergibt sich beim Bremsen eine Bewegung des Kerns in radialer hydraulischer Arbeitsrichtung, so dass der Arbeitsraum verkleinert und Dämpfungsflüssigkeit aus dem Arbeitsraum durch den Dämpfungskanal in den Ausgleichsraum gefördert wird. Die durch das Bremsen verursache Relativbewegung von Kern und Gehäuse wird dadurch bedämpft.

Wird anschließend beschleunigt, bewegt sich der Kern relativ zum Gehäuse in entgegengesetzter Richtung, so dass sich der Arbeitsraum wieder vergrößert und der Ausgleichsraum verkleinert wird. Die zuvor in den Ausgleichsraum verdrängte Dämpfungsflüssigkeit gelangt dabei durch den Dämpfungskanal wieder zurück in den Arbeitsraum. Die durch die Beschleunigung verursache Relativbewegung von Kern und Gehäuse wird dadurch bedämpft. Gleiches gilt für alle schwingungsinduzierten Bewegungen in hydraulischer Arbeitsrichtung. Die Dämpfung sowohl in Brems- als auch in Beschleunigungsrichtung erfolgt durch die Verlagerung der Dämpfungsflüssigkeit vom Arbeitsraum durch den Dämpfungskanal in den Ausgleichsraum und wieder zurück.

Kurzbeschreibung der Zeichnung

Ein Ausführungsbeispiel des erfindungsgemäßen Hydrolagers wird nachfolgend anhand der Figuren 1 bis 3 näher beschrieben.

Diese zeigen jeweils in schematischer Darstellung:

Fig. 1 ein Ausführungsbeispiel eines erfindungsgemäßen Hydrolagers im Längsschnitt,

Fig. 2 einen Querschnitt durch das Hydrolager aus Fig. 1 entlang der Linie A-B und

Fig. 3 einen Querschnitt durch das Hydrolager aus Fig. 1 entlang der Linie A-B mit einer Variante, in der eine zur Anwendung gelangende Elastomerwand mit einer Niere ausgeführt ist.

Ausführung der Erfindung

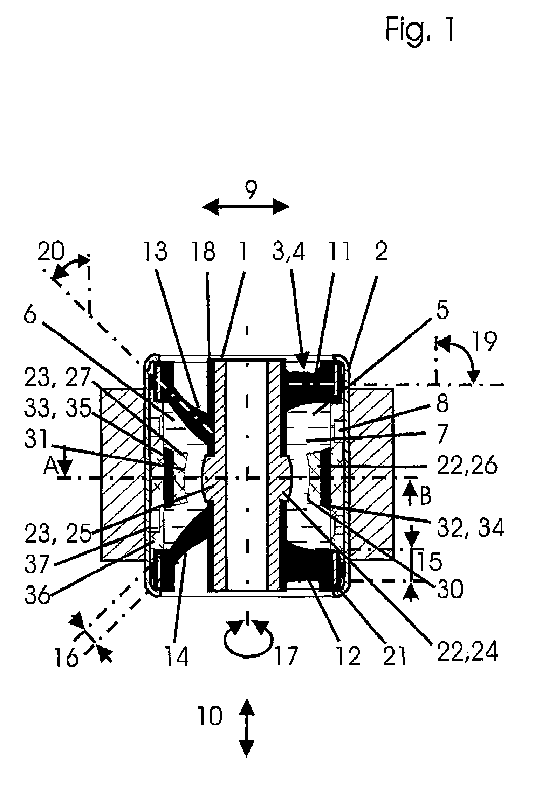

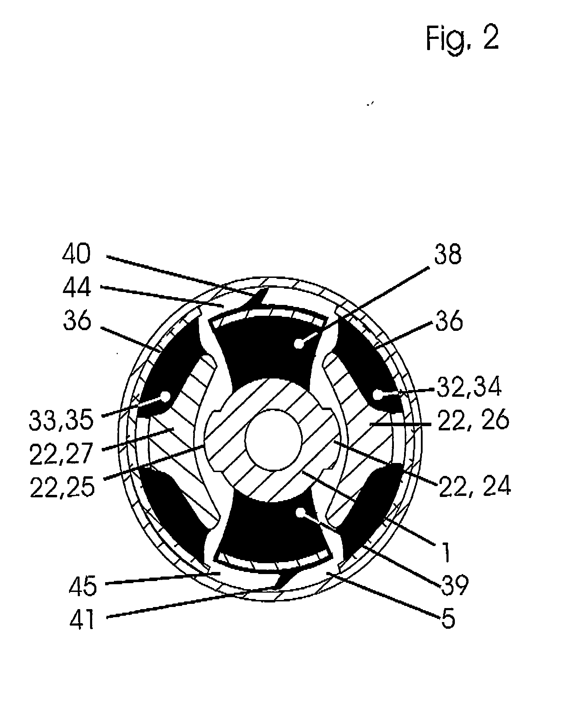

In den Fig. 1 und 2 ist ein Ausführungsbeispiel eines Hydrolagers gezeigt. Das Hydrolager umfasst einen hohlzylinderförmigen Kern 1, der außenumfangsseitig von dem Federkörper 3 umschlossen ist. Der Federkörper 3 besteht aus einem gummielastischen Werkstoff und umfasst die ersten Membranen 11, 12, die zweiten Membranen 13, 14 sowie die Elastomerwände 38, 39. Die ersten Membranen 11, 12 sind einstückig ineinander übergehend mit den zweiten Membranen 13, 14 ausgebildet, wobei die ersten Membranen 11, 12 eine erste Dicke 15 aufweisen, die größer als die zweite Dicke 16 der zweiten Membranen 13, 14 ist. Dabei begrenzen die ersten Membranen 11, 12 zusammen mit den Elastomerwänden 38, 39 den bremsseitigen Arbeitsraum 5 und die zweiten Membranen 13, 14 zusammen mit den Elastomerwänden 38, 39 den beschleunigungsseitigen Ausgleichsraum 6. Beim Einlaufen der Membranen 11, 13 in die Elastomenrwand 38 und/oder der Membranen 12, 14 in die Elastomerwand 39 kann die Kontur eine sprunghafte Richtungsänderung aufweisen.

Der Federkörper 3 ist durch Vulkanisation mit der Außenumfangsfläche 18 des Kerns 1 verbunden.

Radial außenumfangsseitig sind die Membranen 11, 12, 13, 14 mit einem Fensterrohr 21 verbunden, das flüssigkeitsdicht im Gehäuse 2 aufgenommen ist. Das Gehäuse 2 ist hohlzylinderförmig ausgebildet und zur Befestigung am Fensterrohr 21 und damit zur Aufnahme des Kerns 1 und des Federkörpers 3 im Bereich seiner stirnseitigen Enden radial nach innen umgebördelt.

Im Inneren des Hydrolagers ist in radialer hydraulischer Arbeitsrichtung 9 bremsseitig der Arbeitsraum 5 angeordnet und beschleunigungsseitig der Ausgleichsraum 6, wobei der Arbeitsraum 5 und der Ausgleichsraum 6 einander in radialer hydraulischer Arbeitsrichtung 9 gegenüberliegend angeordnet sind. Der Arbeitsraum 5 und der Ausgleichsraum 6 sind mit Dämpfungsflüssigkeit 7 gefüllt und durch den Dämpfungskanal 8 flüssigkeitsleitend miteinander verbunden. Ansonsten sind beide Räume durch die Elastomerwände 38, 39 voneinander getrennt Der Dämpfungskanal 8 ist Bestandteil des Einlegeteils 36, das am Innenumfang 37 des Gehäuses 2 axial zwischen den ersten Membranen 11, 12 und den zweiten Membranen 13, 14 sowie den Elastomerwänden 38, 39 angeordnet ist. Radial außenseitig ist der Dämpfungskanal 8 durch den Innenumfang 37 des Gehäuses 2 begrenzt. Um eine Beschädigung der Membranen 11, 12, 13, 14 durch zu hohe Innendrücke in Arbeits- und Ausgleichsraum 5, 6 zu vermeiden, sind Arbeits- und Ausgleichsraum 5,6 mittels eines Bypasses 44, 45 flüssigkeitsleitend miteinander verbunden. Um sicher zu stellen, dass hier nur ein Flüssigkeitsaustausch bei hohen Innendrücken, also nicht während der bestimmungsgemäßen schwingungsdämpfenden Funktion des Hydrolagers stattfindet, werden diese Bypässe 44, 45 durch die Überdruckventile 40, 41 verschlossen.

Als erfindungswesentlich wird erachtet, dass der Arbeitsraum 5 durch die ersten Membranen 11, 12 sowie die Elastomerwände 38, 39 und der Ausgleichsraum 6 durch die zweiten Membranen 13, 14 sowie die Elastomerwände 38, 39 begrenzt ist, wobei die Membranen 11, 12 und 13, 14 eine deutlich voneinander abweichende Blähsteifigkeit aufweisen. Die erste Blähsteifigkeit der ersten Membranen 11, 12 zusammen mit den Elastomerwänden 38, 39 ist zumindest 1,5-fach größer als die zweite Blähsteifigkeit der zweiten Membranen 13, 14 zusammen mit den Elastomerwänden 38, 39.

Durch die größere Blähsteifigkeit der ersten Membranen 11, 12 im Arbeitsraum 5 und die kleinere Blähsteifigkeit der zweiten Membranen 13, 14 im Ausgleichsraum 6 wird eine strikte Trennung der Funktionen der brems- und beschleunigungsseitigen Membranen 11, 12 und 13, 14 erreicht. Die bremsseitigen ersten Membranen 11, 12 werden während der bestimmungsgemäßen Verwendung des Hydrolagers beim Bremsen eines Kraftfahrzeugs deutlich höheren Lastimpulsen und damit Druckbelastungen ausgesetzt, als die beschleunigungsseitigen zweiten Membranen 13, 14 bei Geschleunigungsvorgängen. Diesen unterschiedlich hohen Druckbelastungen wird durch die abweichende Ausgestaltung und daraus resultierend durch die unterschiedlichen Blähsteifigkeiten der ersten 11, 12 und zweiten Membranen 13, 14 Rechnung getragen.

Um gute Gebrauchseigenschaften des Hydrolagers zu erreichen, sind im Wesentlichen zwei Kriterien zu erfüllen. Bei Bremsvorgängen muss der Anschlagpuffer 22, der sich im Arbeitsraum 5 befindet, praktisch geräuschfrei, insbesondere klopffrei am gehäuseseitigen Gegenanschlag 26 anschlagen.

Ebenso ist es bei Beschleunigungsvorgängen. Bei Beschleunigungsvorgängen wirken jedoch deutlich geringere Kräfte beziehungsweise Kraftimpulse, als bei Bremsvorgängen, so dass die zweiten Membranen 13,14 schwächer werden können und dadurch die zweite Blähsteifigkeit kleiner ausgelegt werden kann.

Dadurch, dass die Dimensionierung der Membranen 11, 12 und 13, 14 und die Größe der beiden Blähsteifigkeiten den unterschiedlichen Belastungen beim Bremsen und Beschleunigen angepasst sind, brauchen die ersten Membranen 11, 12 sowie die erste Blähsteifigkeit nicht unterdimensioniert zu sein, um einen guten Komforteindruck zu erreichen und/oder die zweiten Membranen 13, 14 und die zweite Blähsteifigkeit brauchen nicht überdimensioniert zu sein, um eine ausreichende Steifigkeitsprogression des Hydrolagers beim Bremsen zu erreichen.

Eine Unterdimensionierung der ersten Membranen 11, 12 und der ersten Blähsteifigkeit kann insbesondere zu unerwünschten Klopfgeräuschen beim Anschlagen des Anschlagspuffers 22 am Gegenanschlag 26 führen; eine Überdimensionierung der zweiten Membranen 13,14 und der zweiten Blähsteifigkeit kann unerwünscht dazu führen, dass das Hydrolager insgesamt akustisch auffällig ist und insbesondere dass nicht ausreichend geringe dynamische Steifigkeiten bei hohen Frequenzen erreicht werden.

Durch die zuvor beschriebene Anpassung der Dimensionierung der Membranen 11, 12, 13, 14 und der Blähsteifigkeiten an die jeweiligen Anforderungen, weist das Lager insgesamt gute Gebrauchseigenschaften bezüglich ausreichender radialer Steifigkeitsprogression beim Bremsvorgang und ausreichend geringer dynamischer Steifigkeit bei hohen Frequenzen auf und damit insgesamt eine komfortable Abstimmung.

Im hier gezeigten Ausführungsbeispiel ist die erste Blähsteifigkeit der ersten Membranen 11, 12 etwa zweimal größer, als die zweite Blähsteifigkeit der zweiten Membranen 13, 14.

Zu den guten Gebrauchseigenschaften des Hydrolagers trägt außerdem bei, dass, im Längsschnitt des Hydrolagers betrachtet, die ersten Membranen 11, 12 mit der Außenumfangsfläche 18 des Kerns 1 einen ersten Winkel 19 begrenzen, der größer als ein zweiter Winkel 20 ist, den die zweiten Membranen 13, 14 mit der Außenumfangsfläche 18 des Kerns 1 begrenzen. Im hier dargestellten Ausführungsbeispiel beträgt der erste Winkel 19 90°, der zweite Winkel 20 45°.

Die Anschlagpuffer 22, 23 sind als Anschlagwulste 24, 25 ausgebildet. Die Gegenanschläge 26, 27 sind mittels einer Feder 32, 33 mit dem Gehäuse 2 verbunden, wobei die Federn 32, 33 durch eine Spur 34, 35 aus einem gummielastischen Werkstoff gebildet sind. Auch dadurch werden die komfortable Abstimmung und der geräuscharme Betrieb des Hydrolagers begünstigt.

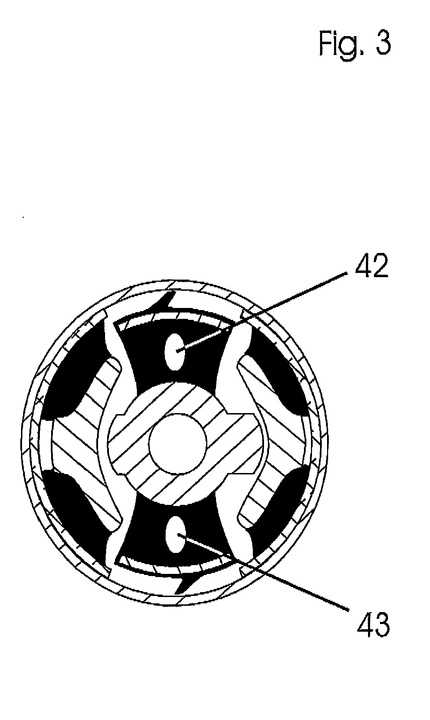

In Figur 3 ist eine Variante eines Hydrolagers abgebildet, bei dem die Elastomerwände 38, 39 durchgehend oder nur teilweise mit Nieren 42, 43 versehen sind. Solche Nieren 42, 43 können der Einstellung von statischen Steifigkeiten dienen, können in diesem speziellen Fall von Hydrolagern aber auch die Blähsteifigkeit der Elastomerwand 38, 39 verringern und damit die Gesamtblähsteifigkeit des Arbeits- 5 und Ausgleichsraums 6 reduzieren.

**Patentansprüche**

1. Hydrolager, umfassend einen Kern (1), ein Gehäuse (2) und zumindest einen Federkörper (3) aus einem gummielastischen Werkstoff, wobei das Gehäuse (2) den Kern (1) aussenumfangsseitig mit radialem Abstand umschließt und wobei in dem durch den Abstand gebildeten Spalt (4) der Federkörper (3) angeordnet ist, wobei der Kern (1), das Gehäuse (2) und der Federkörper (3) einen Arbeitsraum (5) und einen Ausgleichsraum (6) begrenzen, die mit Dämpfungsflüssigkeit (7) gefüllt und durch zumindest einen Dämpfungskanal (8) flüssigkeitsleitend miteinander verbunden sind, wobei der Arbeitsraum (5) und der Ausgleichsraum (6) einander in radialer hydraulischer Arbeitsrichtung (9) gegenüberliegend angeordnet sind und jeweils in axialer Richtung (10) beiderseits durch erste (11, 12) und zweite Membranen (13, 14) des Federkörpers (3) begrenzt sind, **dadurch gekennzeichnet, dass** die ersten Membranen (11, 12) zusammen mit Elastomerwänden (38, 39), die den Arbeitsraum (5) begrenzen, eine erste Blähsteifigkeit aufweisen, die zumindest 1,5-fach größer ist, als die zweite Blähsteifigkeit der zweiten Membranen (13, 14) zusammen mit den Elastomerwänden (38, 39), die den Ausgleichsraum (6) begrenzen.

2. Hydrolager nach Anspruch 1, **dadurch gekennzeichnet, dass** die ersten Membranen (11,12) und/oder die zweiten Membranen (13, 14) jeweils an einer gedachten Radialebene axial mittig des Hydrolagers gespiegelt ausgebildet sind.

3. Hydrolager nach einem der Ansprüche 1 oder 2, **dadurch gekennzeichnet, dass** die ersten Membranen (11, 12) eine erste Dicke (15) aufweisen, die größer als eine zweite Dicke (16) der zweiten Membranen (13, 14) ist.

4. Hydrolager nach einem der Ansprüche 1 bis 3, **dadurch gekennzeichnet, dass**, im Längsschnitt des Hydrolagers betrachtet, die ersten Membranen (11, 12) mit der Außenumfangsfläche (18) des Kerns (1) einen ersten Winkel (19) begrenzen, der größer als ein zweiter Winkel (20) ist, den die zweiten Membranen (13, 14) mit der Außenumfangsfläche (18) des Kerns (1) begrenzen.

5. Hydrolager nach Anspruch 4, **dadurch gekennzeichnet, dass** der erste Winkel (19) 75° bis 90° und der zweite Winkel (20) 30° bis 60° beträgt.

6. Hydrolager nach einem der Ansprüche 1 bis 5, **dadurch gekennzeichnet, dass** die Membranen (11, 12, 13, 14) aussenumfangsseitig mittels eines Fensterrohrs (21) flüssigkeitsdicht mit dem Gehäuse (2) verbunden sind.

7. Hydrolager nach einem der Ansprüche 1 bis 6, **dadurch gekennzeichnet, dass** innerhalb des Arbeitsraums (5) und innerhalb des Ausgleichsraums (6) jeweils ein Anschlagpuffer (22, 23) zur Begrenzung von radialen Auslenkbewegungen von Kern (1) und Gehäuse (2) relativ zueinander angeordnet ist.

8. Hydrolager nach Anspruch 7, **dadurch gekennzeichnet, dass** die Anschlagpuffer (22, 23) durch jeweils einen Anschlagwulst (24, 25) gebildet sind, der sich vom Kern (1) radial nach außen in Richtung des Gehäuses (2) erstreckt und durch jeweils einen gehäuseseitigen Gegenanschlag (26, 27).

9. Hydrolager nach Anspruch 8, **dadurch gekennzeichnet, dass** jeder Gegenanschlag (26, 27) sich radial nach innen in Richtung des Kerns (1) erstreckt und eine zum entsprechenden Anschlagwulst (24, 25) kongruent gestaltete Gegenanschlagfläche (30, 31) aufweist.

10. Hydrolager nach einem der Ansprüche 8 oder 9, **dadurch gekennzeichnet, dass** jeder Gegenanschlag (28, 27) mittels einer Feder (32, 33) gegenüber dem Gehäuse (2) abgestützt ist.

11. Hydrolager nach Anspruch 10, **dadurch gekennzeichnet, dass** die Feder (32, 33) durch eine Spur (34, 35) aus einem gummielastischen Werkstoff gebildet ist.

12. Hydrolager nach einem der Ansprüche 8 bis 11, **dadurch gekennzeichnet, dass** jeder Gegenanschlag (26, 27) mittels der entsprechenden Feder (32, 33) mit einem Einlegeteil (36), das den Dämpfungskanal (8) umfasst, verbunden ist und dass das Einlegeteil (36) am Innenumfang (37) des Gehäuses (2) festgelegt ist und mit diesem den Dämpfungskanal (8) begrenzt.

Fig. 1

Fig. 2

Fig. 3

42

43

Europäisches
Patentamt

European
Patent Office

Office européen
des brevets

## EUROPÄISCHER RECHERCHENBERICHT

Nummer der Anmeldung

EP 12 00 4334

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 298 020 A (ACG FRANCE [FR]; DELPHI FRANCE AUTOMOTIVE SYS [FR]) 21. August 1996 (1996-08-21) | 1-3 | INV. F16F1/387 F16F13/14 |
| Y | * das ganze Dokument * ----- | 4-12 | |
| Y | EP 2 189 678 A2 (AUDI NSU AUTO UNION AG [DE]) 26. Mai 2010 (2010-05-26) | 6-12 | |
| A | * das ganze Dokument * ----- | 1 | |
| Y | US 4 840 359 A (HAMAEKERS ARNO [DE] ET AL) 20. Juni 1989 (1989-06-20) * Spalte 5, Zeile 20 - Spalte 7, Zeile 56; Abbildungen 1,2 * ----- | 4,5 | |

RECHERCHIERTE SACHGEBIETE (IPC)

F16F

Der vorliegende Recherchenbericht wurde für alle Patentansprüche erstellt

| Recherchenort | Abschlußdatum der Recherche | Prüfer |
|---|---|---|
| Den Haag | 30. Oktober 2012 | Burley, James |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................................
& : Mitglied der gleichen Patentfamilie, übereinstimmendes Dokument

EPO FORM 1503 03.82 (P04C03)

**EP 2 672 137 A1**

**ANHANG ZUM EUROPÄISCHEN RECHERCHENBERICHT**
**ÜBER DIE EUROPÄISCHE PATENTANMELDUNG NR.**

EP 12 00 4334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2012

| Im Recherchenbericht angeführtes Patentdokument | | Datum der Veröffentlichung | Mitglied(er) der Patentfamilie | | Datum der Veröffentlichung |
|---|---|---|---|---|---|
| GB 2298020 | A | 21-08-1996 | KEINE | | |
| EP 2189678 | A2 | 26-05-2010 | AT | 545801 T | 15-03-2012 |
| | | | DE | 102008057925 A1 | 20-05-2010 |
| | | | EP | 2189678 A2 | 26-05-2010 |
| US 4840359 | A | 20-06-1989 | DE | 3724432 A1 | 02-02-1989 |
| | | | EP | 0300090 A2 | 25-01-1989 |
| | | | JP | 1046029 A | 20-02-1989 |
| | | | JP | 2809230 B2 | 08-10-1998 |
| | | | US | 4840359 A | 20-06-1989 |

EPO FORM P0461

Für nähere Einzelheiten zu diesem Anhang : siehe Amtsblatt des Europäischen Patentamts, Nr.12/82